# EUROPEAN PATENT SPECIFICATION

(11) **EP 1 602 568 B1**
(45) Date of publication and mention of the grant of the patent: **17.07.2013**
(21) Application number: 05011614.4
(22) Date of filing: 30.05.2005
(51) Int. Cl.: B62J 35/00

(54) **Vehicle fuel tank**
Fahrzeugkraftstofftank
Réservoir de carburant pour véhicule

(30) Priority: 31.05.2004 JP 2004162179
(43) Date of publication of application: 07.12.2005
(73) Proprietor: Yamaha Hatsudoki Kabushiki Kaisha, Iwata-shi, Shizuoka-ken (JP)
(72) Inventor: Suzuki, Satoshi, Iwata-shi Shizuoka-ken (JP); Hirano, Fumito, Iwata-shi Shizuoka-ken (JP)
(74) Representative: Grünecker, Kinkeldey, Stockmair & Schwanhäusser

(56) References cited:
- JP-A- 7 117 763
- JP-A- 57 130 872
- JP-A- 57 178 978
- JP-A- 58 071 219
- US-A- 4 449 723
- US-A1- 2002 063 004

## Description

The present invention relates to a vehicle, in particular a vehicle that makes a motion such as turning while tilting the body, and more particularly it relates to a vehicle including a fuel pump inside a fuel tank.

A motorcycle fuel tank disclosed in JP-A-2002-160685 uses the rear half of the fuel tank as the main chamber, in which a fuel pump is mounted. The fuel tank has a float fuel level gauge on the top of the fuel pump, in which an arm pivotally attached to the body of the gauge is disposed such that the free end pivots above the fuel pump. This eliminates the need for a gauge insertion opening in the fuel tank separate from that for the fuel pump, reducing the limitation to the place of installation of the fuel pump.

However, since the foregoing motorcycle fuel tank has a float fuel level gauge at the top of the fuel pump, and the arm pivotally attached to the body of the gauge is disposed such that the free end pivots above the fuel pump, the pivot range of the float at the free end of the arm does not reach the bottom of the main chamber, making it impossible to measure the amount of fuel in the main chamber accurately.

It is the objective of the present invention to provide a vehicle as indicated above capable of accurate fuel measurement without increasing the outside dimensions of a fuel tank.

This objective is solved in an inventive manner by a vehicle, in particular two-wheeled vehicle, comprising a body frame, and a fuel tank supported by the body frame, wherein a front right part and/or a front left part of the fuel tank are located in positions lower than a front central part thereof, and wherein a float of the fuel gauge is provided in the front right part or the front left part of the fuel tank.

Thus, with the present vehicle, the shape of the fuel tank my be devised such that the float of the fuel gauge can pivot from the bottom to the top of the fuel tank.

Preferably, the fuel gauge comprises a pivotally supported arm that supports the float rising and falling depending on the amount of fuel in the fuel tank. Further, the rear central part of the bottom of the fuel tank may be located in a position lower than the front central part of the bottom of the fuel tank. Still further, an uppermost part of an upper surface of the fuel tank may be located in a position higher than a front part of the bottom surface of the fuel tank. Yet further, the fuel tank may be disposed such that the rear central part is located in a position higher than the lowermost of at least one of the front right part and the front left part. Also, the fuel gauge may be disposed at the rear central part, wherein a pivot shaft of the arm is inclined backward relative to a width of the vehicle in plan view.

According to a further embodiment, a fuel pump disposed in the rear central part of the bottom in the fuel tank is provided, wherein the fuel gauge is disposed on the side of the fuel pump and the fuel gauge and the fuel pump are united to one. Therein, the fuel pump may be disposed such that the length is substantially along the vertical direction in the fuel tank. Likewise, the fuel pump and the fuel gauge may be disposed substantially horizontally in the fuel tank.

According to another embodiment, the bottom of the fuel tank is inclined downward from the front toward the rear, in particular as a slope, wherein the fuel pump integrated with the fuel gauge are disposed at the rear of the inclined part of the fuel tank.

According to yet another embodiment, the body frame comprises a main frame and a sub-frame, both being located in a center of a vehicle width direction.

In the following, the present invention is explained in greater detail with respect to several embodiments thereof in conjunction with the accompanying drawings, wherein:
- Fig. 1: is a left side view of an embodiment of a motorcycle;
- Fig. 2: is an enlarged left side view of the interior of the fuel tank and its periphery of Fig. 1;
- Fig. 3: is a sectional view taken along line A-A of Fig. 2;
- Fig. 4: is a sectional view taken along line B-B of Fig. 2;
- Fig. 5: is an enlarged left side view of the interior of the fuel tank;
- Fig. 6: is a plan view showing the mounting position for a fuel gauge in the fuel tank of Fig. 3;
- Fig. 7: is a left side view of the structure of another fuel pump and a fuel gauge;
- Fig. 8: is a plan view of Fig. 7; and
- Fig. 9: is a left side view of the structure of another fuel pump and a fuel gauge.

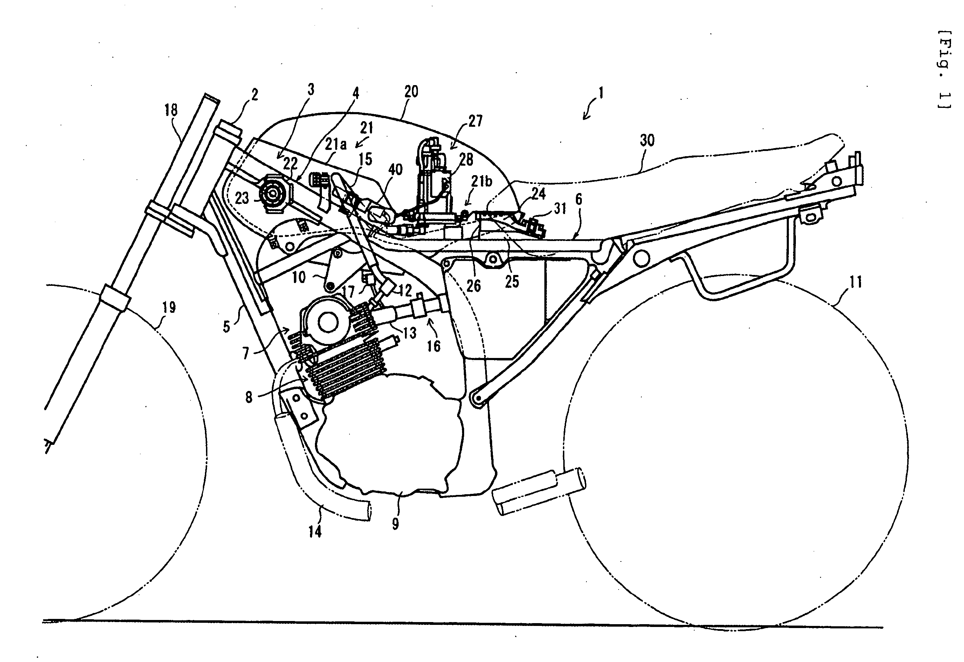

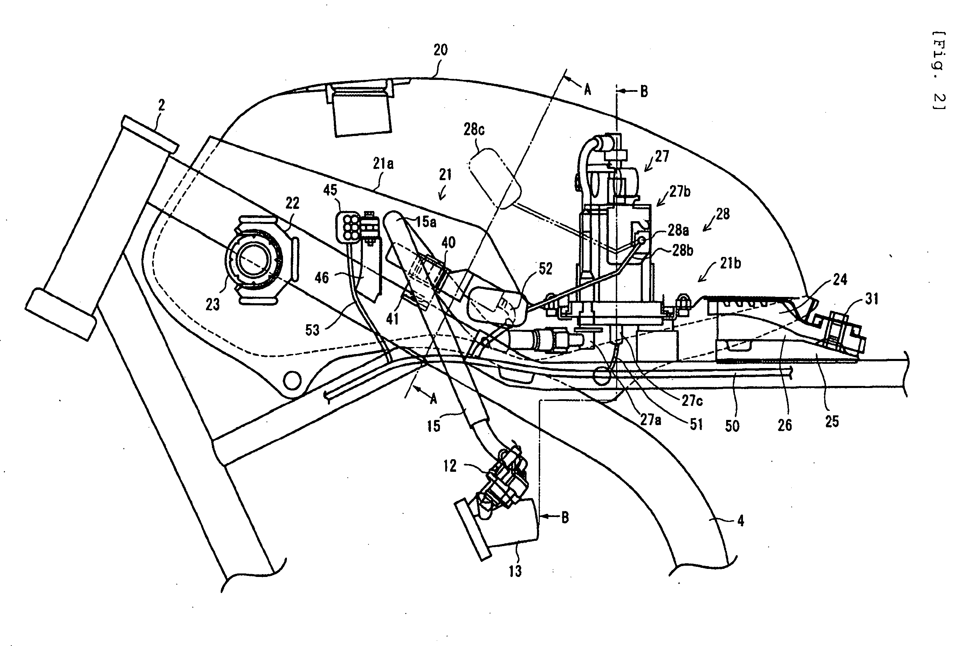

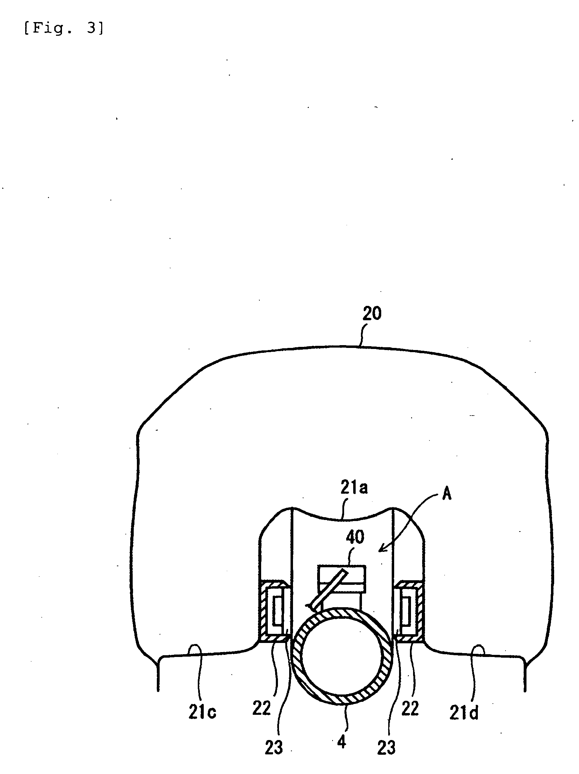

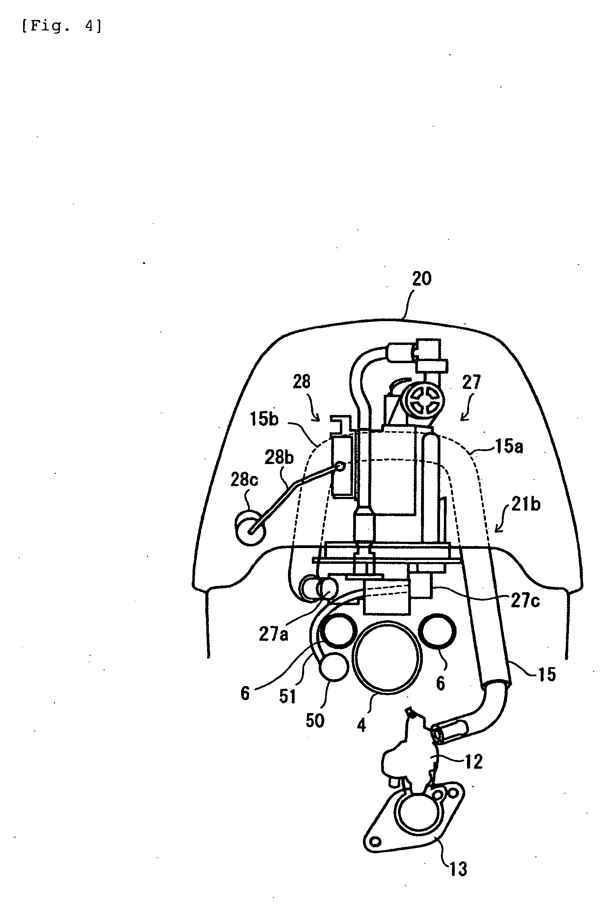

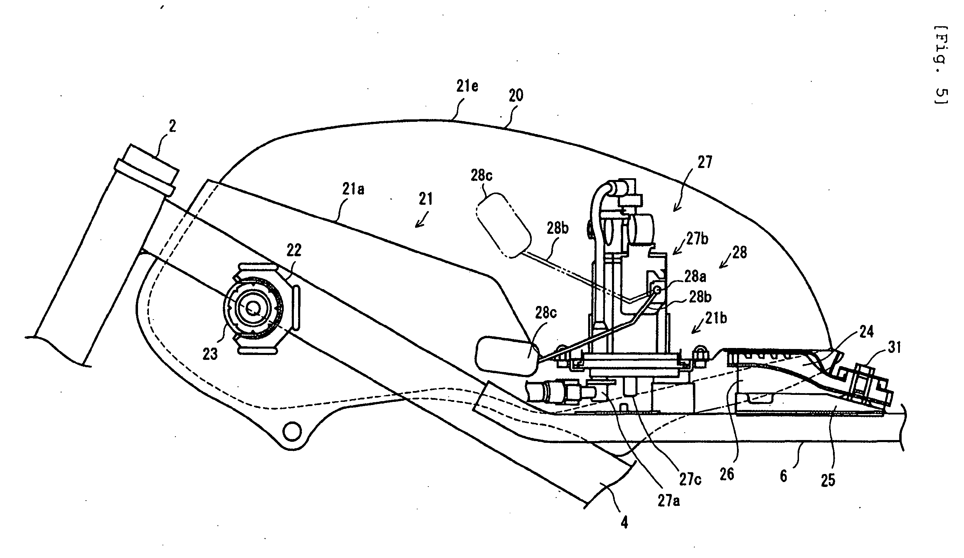

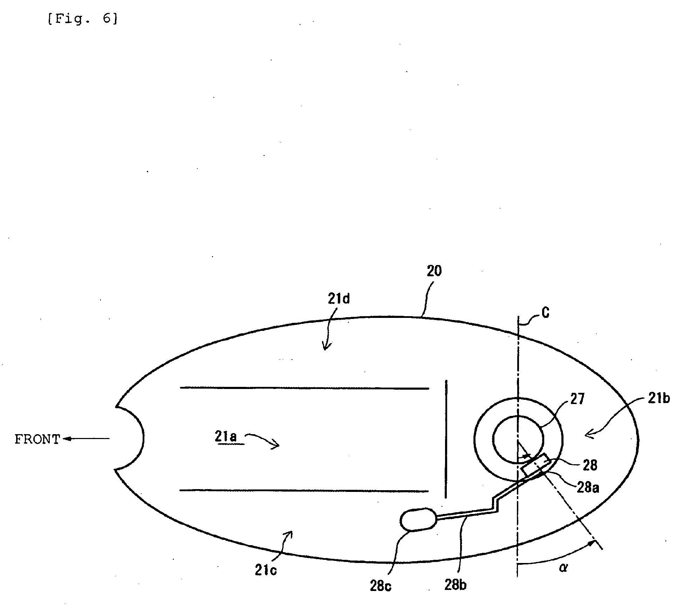

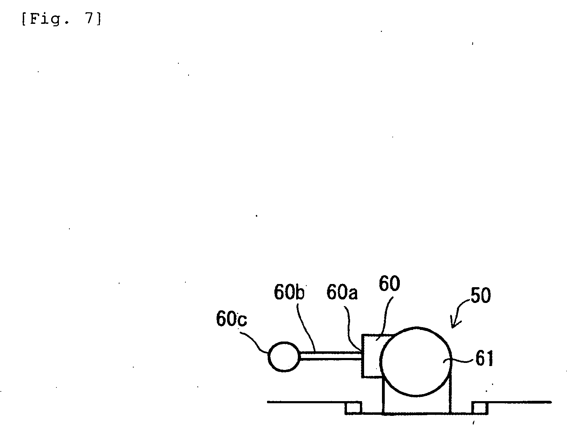

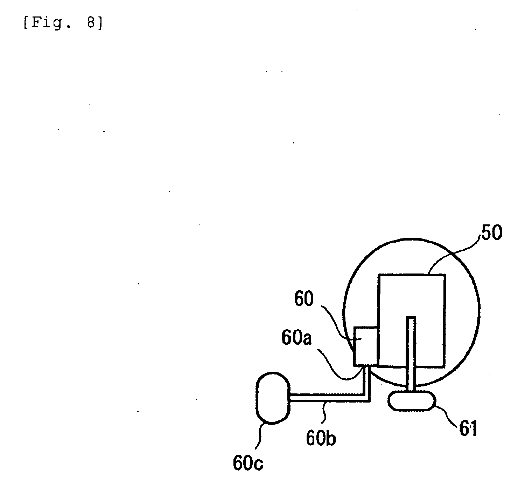

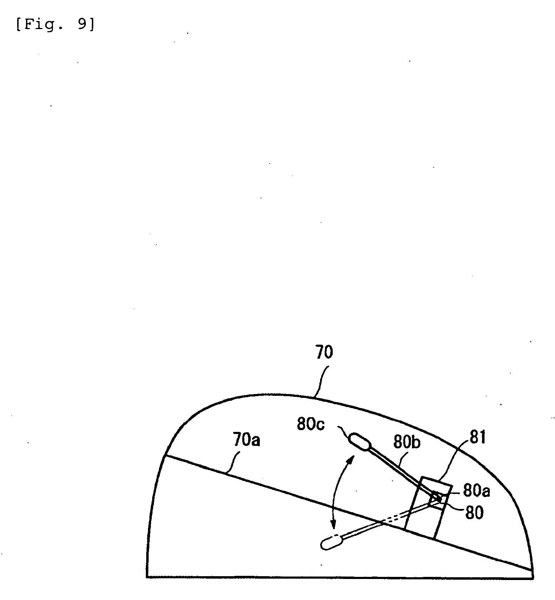

The embodiments are described for a case in which the teaching thereof is applied to a motorcycle. Figs. 1 to 9 are diagrams for describing embodiments of a motorcycle. Fig. 1 is a left side view of the motorcycle; Fig. 2 is an enlarged left side view of the interior of the fuel tank and its periphery of Fig. 1; Fig. 3 is a sectional view taken along line A-A of Fig. 2; Fig. 4 is a sectional view taken along line B-B of Fig. 2; Fig. 5 is an enlarged left side view of the interior of the fuel tank; Fig. 6 is a plan view showing the mounting position for a fuel gauge in the fuel tank of Fig. 3; Fig. 7 is a left side view of the structure of another fuel pump and a fuel gauge; Fig. 8 is a plan view of Fig. 7; and Fig. 9 is a left side view of the structure of another fuel pump and a fuel gauge.

Referring first to Fig. 1, the structure of the motorcycle will be described. In Fig. 1, the motorcycle 1 includes a head pipe 2, to which a main frame 4 extending backward and diagonally downward and a down tube 5 extending downward are connected. To the main frame 4 is connected a subframe 6 extending backward substantially in parallel therewith at a given angle. A space surrounded by the main frame 4, the down tube 5, and the subframe 6 encloses a transmission-integrated engine unit 7. The main frame 4 and the subframe 6 are located in the center of the width of the vehicle and construct a body frame 3.

The engine unit 7 is constructed such that the cylinder axis of a cylinder block 8 inclines slightly toward the front of the vehicle, and a transmission case 9, which is located under the cylinder block 8 and encloses a crankshaft and a transmission, is suspended by the main frame 4 and the down tube 5 along the breadth of the vehicle. The upper end of the engine unit 7 is fixed to a bracket 10 fixed to the main frame 4. Engine power is transmitted to a rear wheel 11 via a drive sprocket (not shown) firmly fixed to the drive shaft of the engine unit 7 and a chain (not shown) wound around the drive sprocket.

To the cylinder block 8 is connected an injector 12, an intake pipe 13, and an exhaust pipe 14. The injector 12, whose upper end is connected to a fuel feed pipe 15, emits a jet of fuel into the cylinder under the control of a control unit 40. The intake pipe 13 connects to a throttle body 16, through which the air supplied from an air cleaner (not shown) is drawn into the cylinder with the amount controlled by a throttle valve (not shown) in the throttle body 16. An intake port (not shown) in the intake pipe 13 connects to an intake pressure sensor 17. The intake pressure sensor 17 has the function of sensing the intake pressure in the intake port and outputting its intake-pressure signal to the control unit 40.

A steering shaft (not shown) rotatably passes through the head pipe 2. To the upper end of the steering shaft is mounted a steering handle (not shown). The upper end of a front fork 18 is attached to the steering shaft. The lower end of the front fork 18 rotatably supports a front wheel 19.

A fuel tank 20 is provided on the main frame 4 and the subframe 6. A tandem seat 30 is provided behind the fuel tank 20. As shown in the enlarged left side view of the fuel tank and the body frame in Fig. 2, the bottom 21 of the fuel tank 20 has a bottom-front central part 21a in the front center, and a flat portion 21b in the rear center of the bottom, in a position lower than the bottom-front central part 21a, and in parallel with the parallel part of the subframe 6, in the side view of the vehicle in the drawing. As shown in Fig. 3, on the front left and right sides of the bottom-front central part 21a are provided a bottom-front left part 21c and a bottom-front right part 21d which project downward from the bottom-front central part 21a. The fuel tank 20 is disposed such that the uppermost portion 21e of the upper surface is located above the front of the bottom. The "side view of the vehicle" means a view in which the left is the front (or the rear) of the vehicle and the right is the rear (or the front), as viewed from the side, which also applies to the following.

The bottom-front left part 21 c and the bottom-front right part 21d of the fuel tank 20 have laterally U-shaped guide brackets 22 which are open forward (leftward in the drawing) and which project from the side walls facing the main frame 4. The main frame 4 has positioning members 23 projecting from the side walls facing the guide brackets 22. The front of the fuel tank 20 is supported by the main frame 4 by inserting the guide brackets 22 projecting from the side walls of the bottom-front left part 21 c and the bottom-front right part 21d into the positioning members 23 projecting from the corresponding positions of the main frame 4.

The bottom-front left part 21c and the bottom-front right part 21d of the fuel tank 20 and the projecting positions of the positioning members 23 of the main frame 4 are determined so as to form a clearance A between the bottom-front central part 21a of the fuel tank 20 and the upper surface of the main frame 4 when the front of the fuel tank 20 is positioned.

A bracket 24 for fixing the rear end of the fuel tank 20 to the subframe 6 is mounted to the rear end (on the right in the drawing) of the flat portion 21b of the fuel tank 20. The subframe 6 has a positioning member 25 projecting from the position facing the bracket 24. The rear end of the fuel tank 20 is supported by the subframe 6 by fixing the bracket 24 to the positioning member 25 of the subframe 6 via a rubber damper 26 with a bolt 31.

Since the rear end of the fuel tank 20 is supported by the subframe 6 with the bracket 24 and the positioning member 25 of the subframe 6, a clearance B is formed between the flat portion 21b of the fuel tank 20 and the upper surface of the subframe 6, as shown in the cross-sectional view in Fig. 4 taken on line B-B of Fig. 2.

The clearance A and the clearance B are connected with each other by supporting the front of the fuel tank 20 by the main frame 4 and supporting the rear end of the fuel tank 20 by the subframe 6. As a result, the continuous clearances A and B formed between the bottom 21 of the fuel tank 20 and the upper surfaces of the main frame 4 and the subframe 6 can enclose multiple components.

The fuel tank 20 can be maintained by taking off the bracket 24 at the rear end from the positioning member 25 and lifting the rear end with the guide brackets 22 and the positioning members 23 at the front as the pivot center.

As shown in the enlarged left side view showing the structure of the interior of the fuel tank of Fig. 5, a fuel pump 27 for feeding the fuel in the fuel tank 20 to the fuel feed pipe 15 is provided upright from the flat portion 21b such that the part except a fuel delivery portion 27a and a power supply portion 27c mounted to the lower end thereof is enclosed in the fuel tank 20. The fuel pump 27 stands upright such that its fuel intake port (not shown) is exposed upward from the flat portion 21b in the fuel tank 20 and the fuel delivery portion 27a and the power supply portion 27c are exposed downward from the flat portion 21b outside the fuel tank 20.

To the side 27b of the fuel pump 27 is integrated a fuel gauge 28 for measuring the amount of fuel in the fuel tank 20. The fuel gauge 28 includes an arm 28b whose base end is pivotally attached to a pivot shaft 28a and a float 28c attached to the end of the arm 28b.

The fuel gauge 28 measures the amount of fuel in such a way that the arm 28b that supports the float 28c pivots depending on the change in fuel level in the range from the vicinity of the bottom of the bottom-front left part 21c on the front left side of the fuel tank 20 to the vicinity of the uppermost part 21e of the upper surface, shown in Fig. 3, and the change of the pivot position is converted to a change in the angle of the pivot shaft 28a.

The fuel gauge 28 has a signal/power cable (not shown) that is connected from the flat portion 21b of the fuel tank 20 to the power supply portion 27c mounted outside the flat portion 21b. The signal/power cable is connected to an inner contact terminal (not shown) of the power supply portion 27c inside the fuel tank 20 and is connected to a main harness 50 via a harness 51 connected to an outer contact terminal (not shown) of the power supply portion 27c outside the fuel tank 20. The signal/power cable outputs a fuel measurement signal to the control unit 40 via the harness 51 and the main harness 50. The signal/power cable also supplies power supplied from a relay 45 to the fuel pump 27 via the harness 51 and the main harness 50.

As shown in the plan view of Fig. 6 which shows the position of the fuel gauge in the fuel tank shown in Fig. 3, the fuel gauge 28 is mounted on the left of the fuel tank 20, with the pivot shaft 28a inclined backward at an angle α relative to the center line C that passes through the center of the fuel pump 27 in the drawing, or relative to the width of the vehicle in plan view. The fuel gauge 28 is thus mounted to the fuel pump 27. Accordingly, when the float 28c rises and falls at the bottom-front left part 21c in the fuel tank 20, the float 28c moves toward the center when rising and pivots in arc shape along the side of the bottom-front left part 21c. As a result, the pivot range of the float 28c becomes larger than that of conventional one, from the vicinity of the bottom of the bottom-front left part 21c to the vicinity of the uppermost part 21e of the upper surface, allowing accurate fuel measurement. The "plan view of the vehicle" means a view in which the left is the front (or the rear) of the vehicle and the right is the rear (or the front), as viewed from the top, which also applies to the following.

As shown in Fig. 4, the cross section taken along B-B of Fig. 2, the fuel feed pipe 15 is mounted to the fuel delivery portion 27a of the fuel pump 27. The fuel feed pipe 15 passes through the bottom 21 of the fuel tank 20 while using the clearance B, extends from the bottom 21 to the front left upper position outside the fuel tank 20, forms a bent portion 15a in the vicinity of the pivot center of the fuel tank 20, and connects to the injector 12. The fuel feed pipe 15 also has a bent portion 15b on the side from the fuel delivery portion 27a to the bottom of the fuel tank 20.

The connections of the fuel feed pipe 15 with the fuel delivery portion 27a and the injector 12 are made of metal; the intermediate portions of the fuel feed pipe 15 that construct the bent portions 15a and 15b are made of plastics such as rubber.

The control unit 40 for controlling the direction of the motorcycle 1 is fixed to the upper surface of the main frame 4 in the clearance A between the bottom-front central part 21a of the bottom 21 of the fuel tank 20 and the upper surface of the main frame 4. The control unit 40 connects to a harness 52 via the main harness 50 across the injector 12, the throttle body 16, the intake pressure sensor 17, the fuel gauge 28, and so forth, and controls the operation of various actuators for the engine unit 7 on the basis of the detection signals from various sensors. In the clearance A, the relay 45 for controlling power supply to the control system of the motorcycle 1 is fixed to the upper surface of the main frame 4 with a mounting member 46. The relay 45 connects to a harness 53. The harness 53 connects to the main harness 50. The relay 45 supplies power to the injector 12, the throttle body 16, the intake pressure sensor 17, the fuel gauge 28, the control unit 40, and so forth via the harness 53 and the main harness 50. The main harness 50 is disposed along the side of the main frame 4 and the subframe 6.

Since the bottom-front left part 21c and the bottom-front right part 21d, which project downward from the bottom-front central part 21a, and the uppermost part 21e are provided at the front of the fuel tank 20, a sufficient height of the fuel tank 20 can be provided without increasing the outside dimensions. Since the fuel gauge 28 is disposed on the flat portion 21b in the rear center, in a position lower than the bottom-front central part 21a of the fuel tank 20, the fuel gauge 28 can be disposed without increasing the outside dimensions of the fuel tank 20. Since the fuel gauge 28 is disposed so that the float 28c can move vertically at the bottom-front left part 21c in the fuel tank 20, where a sufficient downward height is provided, a large pivotal angle of the arm 28b can be provided, allowing accurate fuel measurement without increasing the outside dimensions of the fuel tank 20.

Since the fuel gauge 28 is disposed on the flat portion 21b at the rear center such that the pivot shaft 28a of the arm 28b is inclined backward at an angle α relative to the width of the vehicle in plan view, the float 28c moves close to the center when rising or falling, allowing the pivot angle of the arm 28b to be increased over conventional one to permit accurate fuel measurement without increasing the outside dimensions of the upper or lower part of the fuel tank 20.

Since the fuel gauge 28 is disposed on the left of the fuel pump 27, and the fuel gauge 28 and the fuel pump 27 are united to one, the pivot shaft 28a of the fuel gauge 28 can be disposed in a desired position without increasing the outside dimensions of the fuel tank 20 and with a simple structure, allowing more accurate fuel measurement.

Since the fuel pump 27 is disposed in the fuel tank 20 such that the length or the line perpendicular to the flat portion 21 b of Fig. 5 is substantially along the vertical direction, the upper surface of the rear of the fuel tank 20 can be located lower than the front, allowing the rear of the fuel tank 20 to be formed to the riding position of a rider to improve ride comfort.

While the embodiment shows a case in which the fuel pump 27 is disposed substantially vertically in the fuel tank 20, a fuel pump 50 may be disposed substantially horizontally in the fuel tank 20 such that the length of the fuel pump 50 is along the flat portion 21 b at the rear center, as shown in Figs. 7 and 8. In this case, a fuel gauge 60 is mounted on the left side of the fuel pump 50 and has an arm 60b whose base end is pivotally mounted to a pivot shaft 60a, and a float 60c mounted to the end of the arm 60b. The reference numeral 61 in the drawings indicates a filter.

The fuel gauge 60 measures the amount of fuel, as with the fuel gauge 28, in such a way that the arm 60b that supports the float 60c pivots depending on the change in fuel level in the range from the vicinity of the bottom of the bottom-front left part 21 c at the front left side of the fuel tank 20 to the vicinity of the uppermost part 21e, shown in Fig. 3, the change of the pivot position is converted to a change in the angle of the pivot shaft 60a.

Thus, since the fuel gauge 60 is also arranged at the bottom-front left part 21 c in the fuel tank 20 so that the float 60c rises and falls in a space with a sufficient downward height, a large pivot angle of the float 60c can be provided, allowing accurate fuel measurement without increasing the outside dimensions of the fuel tank 20. Since the fuel gauge 60 is disposed in the fuel tank 20 such that the length is substantially along the horizontal direction, the upper surface of the rear of the fuel tank 20 can be further lowered. Consequently, the limitation due to the shape of the fuel tank can be circumvented in arrangement of the fuel pump in the fuel tank.

When the bottom is inclined as a slope 70a that is inclined downward from the front toward the rear, as in a fuel tank 70 of Fig. 9, a fuel pump 81 integrated with a fuel gauge 80 may be disposed at the rear of the slope 70a. The front left and right parts of the fuel tank 70 have bottom-front left and right parts (not shown).

In this case, the fuel gauge 80 mounted on the left side of the fuel pump 81 has an arm 80b whose base end is pivotally mounted to a pivot shaft 80a, and a float 80c mounted to the end of the arm 80b.

Thus, since the fuel gauge 80 is also arranged at the bottom-front left part in the fuel tank 70 so that the float 80c rises and falls in a space with a sufficient downward height, a large pivot angle of the float 80c can be provided, allowing accurate fuel measurement without increasing the outside dimensions of the fuel tank 70.

While the embodiments show a case in which the float of the fuel gauge rises and falls above the bottom-front left part in the fuel tank, the teaching thereof is not limited to that but the float may move vertically above the bottom-front right part. In this case, the fuel gauge can be mounted on the right side of the fuel pump.

A vehicle according to the above-described embodiments includes: a body frame; a fuel tank supported by the body frame; and a fuel gauge having an arm that pivotally supports a float rising and falling depending on the amount of fuel in the fuel tank. The fuel tank is disposed such that the front right part and the front left part of the bottom are located in positions lower than the front central part, the uppermost part of the upper surface is located in a position higher than the front of the bottom, and the rear central part of the bottom is located in a position lower than the front central part. The fuel gauge is disposed in the rear central part of the bottom in the fuel tank such that the float rises and falls above the front right part or the front left part.

With such a structure, the front left and right parts projecting downward and the uppermost part are provided at the front of the fuel tank, a sufficient height can be provided without increasing the outside dimensions of the fuel tank. Since the fuel gauge is disposed in the rear center lower than the bottom-front central part, the fuel gauge can be disposed without increasing the outside dimensions of the fuel tank. Since the fuel gauge is disposed so that the float rises and falls at the front left and right parts in the fuel tank, where a sufficient downward height can be provided, a large pivot angle of the arm can be provided, allowing accurate fuel measurement without increasing the outside dimensions of the fuel tank.

The vehicle according to the embodiments may have a structure in which the fuel tank is disposed such that the rear central part is located in a position higher than the lowermost of at least one of the front right part and the front left part.

With such a structure, the fuel tank is disposed such that the rear central part is located in a position higher than the lowermost of at least one of the front right part and the front left part. This increases the pivot angle of the arm, allowing accurate fuel measurement without increasing the outside dimensions of the fuel tank.

The vehicle according to the embodiment preferably may have a structure in which the fuel gauge is disposed at the rear central part such that the pivot shaft of the arm is inclined backward relative to the width of the vehicle in plan view.

With such a structure, the fuel gauge is disposed at the rear central part such that the pivot shaft of the arm is inclined backward relative to the width of the vehicle in plan view. Thus, the float moves close to the center when rising or falling, increasing the pivot angle of the arm to allow accurate fuel measurement without increasing the outside dimensions of the upper or lower part of the fuel tank.

Preferably, the vehicle according to the embodiments further includes a fuel pump disposed in the rear central part of the bottom in the fuel tank. The fuel gauge may be disposed on the side of the fuel pump. The fuel gauge and the fuel pump may be united to one.

With such a structure, the vehicle further includes a fuel pump disposed in the rear central part of the bottom in the fuel tank. The fuel gauge is disposed on the side of the fuel pump. The fuel gauge and the fuel pump are united to one. Thus, the pivot shaft can be disposed in a desired position without increasing the outside dimensions of the fuel tank and with a simple structure, allowing accurate fuel measurement.

The vehicle according to the embodiments may have a structure in which the fuel pump is disposed such that the length is substantially along the vertical direction in the fuel tank.

This structure can lower the upper surface of the rear of the fuel tank than the front, allowing the rear of the fuel tank to be shaped to the riding position of the rider to improve rider comfort.

The vehicle according to the embodiments is capable of accurate fuel measurement without increasing the outside dimensions of the fuel tank, and in particular, it is useful for motorcycles and so forth whose frame is disposed in the center of the breadth of the body.

As discussed, according to a preferred embodiment, the vehicle includes: a body frame; a fuel tank supported by the body frame; and a fuel gauge having pivotally an arm that supports a float rising and falling depending on the amount of fuel in the fuel tank. The fuel tank is disposed such that the front right part and the front left part of the bottom are located in positions lower than the front central part, the uppermost part of the upper surface is located in a position higher than the front of the bottom, and the rear central part of the bottom is located in a position lower than the front central part. The fuel gauge is disposed in the rear central part of the bottom in the fuel tank such that the float rises and falls at the front right part or the front left part. This allows accurate fuel measurement without increasing the outside dimensions of a fuel tank by devising the shape of the fuel tank so that the float of the fuel gauge can pivot from the bottom to the top of the fuel tank, and disposing the fuel gauge in the rear center of the bottom of the fuel tank. Namely, to allow accurate fuel measurement without increasing the outside dimensions of a fuel tank, the shape of the fuel tank is devised so that the float can pivot from the bottom to the top of the fuel tank, and the fuel gauge is disposed in the rear center of the bottom of the fuel tank.

Briefly summarizing the above, to allow accurate fuel measurement without increasing the outside dimensions of a fuel tank, a bottom-front left part 21c and a bottom-front right part 21 d which project downward from a bottom-front central part 21a, and an uppermost part 21 e are provided at the front of a fuel tank 20. Accordingly, a sufficient height in a vertical direction can be provided without increasing the outside dimensions of the fuel tank 20. A fuel gauge 28 is disposed on a flat portion 21 b in the rear central part lower than the bottom-front central part 21 a of the fuel tank 20. Accordingly, the fuel gauge 28 can be disposed without increasing the outside dimensions of the fuel tank 20. The fuel gauge 28 is disposed such that a float 28c can rise and fall at the bottom-front left part 21 c in the fuel tank 20, where a sufficient downward height can be provided. This provides a large pivot angle of an arm 28b, allowing accurate fuel measurement without increasing the outside dimensions of the fuel tank 20.

## Claims

1. Vehicle, in particular two-wheeled vehicle, comprising a body frame (3), and a fuel tank (20) supported by the body frame (3), wherein a front right part (21d) and/or a front left part (21c) of the fuel tank (20) are located in positions lower than a front central part (21 a) thereof, **characterized in that** a float (28c) of the fuel gauge (28) is provided in the front right part (21 d) or the front left part (21 c) of the fuel tank (20).

2. Vehicle according to claim 1, **characterized in that** the fuel gauge (28) comprises a pivotally supported arm (28b) that supports the float (28c) rising and falling depending on the amount of fuel in the fuel tank (20).

3. Vehicle according to claim 1 or 2, **characterized in that** the rear central part (21 b) of the bottom (21) of the fuel tank (20) is located in a position lower than the front central part (21 a) of the bottom (21) of the fuel tank (20).

4. Vehicle according to one of the claims 1 to 3, **characterized in that** an uppermost part (21e) of an upper surface of the fuel tank (20) is located in a position higher than a front part of the bottom surface (21) of the fuel tank (20).

5. Vehicle according to one of the claims 1 to 4, **characterized in that** the fuel tank (20) is disposed such that the rear central part (21 b) is located in a position higher than the lowermost of at least one of the front right part (21 d) and the front left part (21 c).

6. Vehicle according to one of the claims 2 to 5, **characterized in that** the fuel gauge (28) is disposed at the rear central part (21 b), wherein a pivot shaft of the arm (28b) is inclined backward relative to a width of the vehicle in plan view.

7. Vehicle according to one of the claims 1 to 6, **characterized by** a fuel pump (27) disposed in the rear central part (21 b) of the bottom (21) in the fuel tank (20), wherein the fuel gauge (28) is disposed on the side of the fuel pump (27) and the fuel gauge (28) and the fuel pump (27) are united to one.

8. Vehicle according to claim 7, **characterized in that** the fuel pump (27) is disposed such that the length is substantially along the vertical direction in the fuel tank (20).

9. Vehicle according to claim 7, **characterized in that** the fuel pump (27) and the fuel gauge (60) are disposed substantially horizontally in the fuel tank (20).

10. Vehicle according to one of the claims 2 to 5, **characterized in that** the bottom (21) of the fuel tank (20) is inclined downward from the front toward the rear, in particular as a slope (70a), wherein the fuel pump (81) integrated with the fuel gauge (80) are disposed at the rear of the inclined part (70a) of the fuel tank (20).

11. Vehicle according to one of the claims 1 to 10, **characterized in that** the body frame (3) comprises a main frame (4) and a sub-frame (6), both being located in a center of a vehicle width direction.

## Patentansprüche

1. Fahrzeug, insbesondere ein Zweiradfahrzeug, aufweisend einen Karosserierahmen (3) und einen Kraftstofftank (20), gelagert durch den Karosserierahmen (3), wobei ein rechtes Vorderteil (21 d) und / oder ein linkes Vorderteil (21 c) des Kraftstofftanks (20) in Positionen niedriger als ein vorderer mittlerer Abschnitt (21) desselben angeordnet sind, **dadurch gekennzeichnet, dass** ein Schwimmer (28c) einer Kraftstoffmesseinrichtung (28) in dem vorderen rechten Teil (21 d) des vorderen linken Teils (21 c) des Kraftstofftanks (20) vorgesehen ist.

2. Fahrzeug nach Anspruch 1, **dadurch gekennzeichnet, dass** die Kraftstoffmesseinrichtung (28) ein schwenkbar gelagerten Arm (28b) aufweist, der den Schwimmer (28c) lagert, der in Abhängigkeit von einer Kraftstoffmenge in dem Kraftstofftank (20) aufsteigt oder fällt.

3. Fahrzeug nach Anspruch 1 oder 2, **dadurch gekennzeichnet, dass** der hintere mittlere Teil (21 b) des Bodens (21) des Kraftstofftanks (20) in einer Position niedriger als der vordere mittlere Teil (21 a) des Bodens (21) des Kraftstofftanks (20) angeordnet ist.

4. Fahrzeug nach einem der Ansprüche 1 bis 3, **dadurch gekennzeichnet, dass** ein oberster Teil (21 e) der oberen Oberfläche des Kraftstofftanks (20) in einer Position höher als ein vorderer Teil der Bodenoberfläche (21) des Kraftstofftanks (20) angeordnet ist.

5. Fahrzeug nach einem der Ansprüche 1 bis 4, **dadurch gekennzeichnet, dass** der Kraftstofftank (20) derart angeordnet ist, dass der hintere mittlere Teil (21 b) in einer Position höher als der unterste von zumindest einem des vorderen rechten Teils (21 d) oder dem vorderen linken Teil (21 c) angeordnet ist.

6. Fahrzeug nach einem der Ansprüche 2 bis 5, **dadurch gekennzeichnet, dass** die Kraftstoffmesseinrichtung (28) an dem hinteren mittleren Teil (21 b) angeordnet ist, wobei eine Schwenkwelle des Arms (28b) nach hinten in Bezug auf eine Breite des Fahrzeuges in Draufsicht geneigt ist.

7. Fahrzeug nach einem der Ansprüche 1 bis 6, **gekennzeichnet durch** eine Kraftstoffpumpe (27), angeordnet in dem hinteren mittleren Teil (21 b) des Bodens (21) in dem Kraftstofftank (20), wobei die Kraftstoffmesseinrichtung (28) auf der Seite der Kraftstoffpumpe (27) angeordnet ist und die Kraftstoffmesseinrichtung (28) und die Kraftstoffpumpe (27) in einem vereint sind.

8. Fahrzeug nach Anspruch 7, **dadurch gekennzeichnet, dass** die Kraftstoffpumpe (27) derart angeordnet ist, dass die Länge im Wesentlichen längs der vertikalen Richtung in dem Kraftstofftank (20) ist.

9. Fahrzeug nach Anspruch 7, **dadurch gekennzeichnet, dass** die Kraftstoffpumpe (27) und die Kraftstoffmesseinrichtung (28) im Wesentlichen horizontal in dem Kraftstofftank (20) angeordnet sind.

10. Fahrzeug nach einem der Ansprüche 2 bis 5, **dadurch gekennzeichnet, dass** der Boden (21) des Kraftstofftanks (20) nach unten von vorn in Richtung nach hinten, insbesondere als eine Neigung (70a) geneigt ist, wobei die Kraftstoffpumpe (81), integriert mit der Kraftstoffmesseinrichtung (80), hinter dem geneigten Teil (70a) des Kraftstofftanks (20) angeordnet sind.

11. Fahrzeug nach einem der Ansprüche 1 bis 10, **dadurch gekennzeichnet, dass** der Karosserierahmen (3) einen Hauptrahmen (4) und einen Sub- Rahmen (6) aufweist, wobei beide in einer Mitte in Richtung einer Breite des Fahrzeuges angeordnet sind.

## Revendications

1. Véhicule, en particulier véhicule à deux roues, comprenant un châssis de carrosserie (3) et un réservoir de carburant (20) supporté par le châssis de carrosserie (3), dans lequel une partie avant droite (21d) et/ou une partie avant gauche (21c) du réservoir de carburant sont situées dans des positions inférieures à une partie centrale avant (21a) de celui-ci, **caractérisé en ce qu'**un flotteur (28c) de la jauge de carburant (28) est disposé dans la partie avant droite (21d) ou la partie avant gauche (21c) du réservoir de carburant (20).

2. véhicule selon la revendication 1, **caractérisé en ce que** la jauge de carburant (28) comprend un bras supporté de façon pivotante (28b) qui supporte l'élévation ou l'abaissement du flotteur (28c) suivant la quantité de carburant dans le réservoir de carburant (20).

3. véhicule selon les revendications 1 ou 2, **caractérisé en ce que** la partie centrale arrière (21b) du fond (21) du réservoir de carburant (20) est située dans une position inférieure à la partie centrale avant (21a) du fond (21) du réservoir de carburant (20).

4. Véhicule selon l'une des revendications 1 à 3, **caractérisé en ce qu'**une partie la plus haute (21e) d'une surface supérieure du réservoir de carburant (20) est située dans une position supérieure à une partie avant de la surface du fond (21) du réservoir de carburant (20).

5. Véhicule selon l'une des revendications 1 à 4, **caractérisé en ce que** le réservoir de carburant (20) est disposé de telle manière que la partie centrale arrière (21b) soit située dans une position supérieure à la plus basse d'au moins une partie parmi la partie avant droite (21d) et la partie avant gauche (21c).

6. Véhicule selon l'une des revendications 2 à 5, **caractérisé en ce que** la jauge de carburant (28) est disposée à la partie centrale arrière (21b), dans laquelle un axe de pivot du bras (28b) est incliné vers l'arrière relativement à une largeur du véhicule sur une vue en plan.

7. Véhicule selon l'une des revendications 1 à 6, **caractérisé par** une pompe de carburant (27) disposée dans la partie centrale arrière (21b) du fond (21) dans le réservoir de carburant (20), dans lequel la jauge de carburant (28) est disposée sur le côté de la pompe de carburant (27) et la jauge de carburant (28) et la pompe de carburant (27) sont unies en un seul corps.

8. Véhicule selon la revendication 7, **caractérisé en ce que** la pompe de carburant (27) est disposée de telle manière que la longueur soit sensiblement suivant la direction verticale dans le réservoir de carburant (20).

9. Véhicule selon la revendication 7, **caractérisé en ce que** la pompe de carburant (27) et la jauge de carburant (60) sont disposées sensiblement horizontalement dans le réservoir de carburant (20).

10. Véhicule selon l'une des revendications 2 à 5, **caractérisé en ce que** le fond (21) du réservoir de carburant (20) est incliné vers le bas de l'avant vers l'arrière, en particulier suivant une pente (70a), dans lequel la pompe de carburant (81) intégrée à la jauge de carburant (80) sont disposées à l'arrière de la partie inclinée (70a) du réservoir de carburant (20).

11. véhicule selon l'une des revendications 1 à 10, **caractérisé en ce que** le châssis de carrosserie (3) comprend un châssis principal (4) et un sous-châssis (6), tous deux situés au centre d'une direction de la largeur du véhicule.
